Europäisches Patentamt

**European Patent Office**

Office européen des brevets

(19)

(11) Publication number: **0 066 143**
A2

# (12) EUROPEAN PATENT APPLICATION

(21) Application number: **82104195.1**

(22) Date of filing: **13.05.82**

(51) Int. Cl.³: **E 04 H 17/10**

(30) Priority: **15.05.81 NZ 197119**

(43) Date of publication of application:
**08.12.82 Bulletin 82/49**

(84) Designated Contracting States:
**AT BE CH DE FR GB IT LI LU NL SE**

(71) Applicant: **Wier, Jan Henry**
**"Burleigh"**
**Bulls(NZ)**

(72) Inventor: **Wier, Jan Henry**
**"Burleigh"**
**Bulls(NZ)**

(74) Representative: **Lally, William et al,**
**FORRESTER & BOEHMERT Widenmayerstrasse 4**
**D-8000 Munchen 22(DE)**

(54) A fence connector and a method of positioning a fence connector on a fence post.

(57) The invention relates to fence connectors for transversely positioning a fence wire (5) on a fence post (4) and of the kind comprising a shaped stripped member (1) resiliently deformable to a compressed position where a first pair of holes (2, 2a) are aligned so that the post (4) may be passed therethrough, with the connector being positioned on the fence post by natural constraint.

According to this invention the strip member is provided with an end portions (7, 8) which are bent inwardly at a position transversely of the common axis and approximately tangentially to the rear of the first pair of holes (2, 2a) to form an enclosure in the connector in which a fence wire (5) may be locatable. The positioning of the bends (6, 6a) and preferably reinforcing corrugations (8b) on one end of the portion (8) provide a connector of significantly improved strength for fencing applications.

The invention furthermore provides secondary pairs of holes (16) in which pliers (20) may be engaged for a method of application of the connector to a fence post.

FIG. 1.

A FENCE CONNECTOR AND A METHOD OF POSITIONING A FENCE CONNECTOR
ON A FENCE POST

This invention relates to a connector for positioning
a fencing wire on a fencing post against lateral displacement.

It is known to provide a connector for relatively
positioning two elongate members, where facility is made
for the connection or release of one elongate member from
the connector such that the connector does not have to be
removed from the one elongate member to which it is attached
to effect such connection or release. This type of connector
is disclosed in the applicants United States Patent
Specification Number 4,243,343. However, it has been found
that the connector as disclosed in that specification includes
at least one disadvantage in relation to its being capable of
being dislodged and stretched beyond further use when a
continuous upward load is applied to the connector by the
second elongate member. It has furthermore been found that
this particular connector, manufactured in spring steel
material is sometimes difficult to position on the fence post.

It is thus an object of this invention to provide an
improved connector to that disclosed in United States Patent
Specification Number 4,243,343, which at least goes some way
towards overcoming the disadvantages which have been
experienced in relation to the use of that connector as
a fence connector.

Therefore, according to a first aspect of this invention
there is provided a fence connector for transversely positioning a fence wire on a fence post, comprising a shaped strip member being resiliently deformable by compression from a natural position, to a compressed position where its two ends are in juxtaposition; a first pair of holes provided through said strip member and adapted to receive a fence post therethrough when said body portion is in a compressed position: characterised in that the body portion is constrained against returning to its natural position by the fence post when located through the first pair of holes, to thereby secure the strip member by a frictional engagement to a required position on the fence post; and wherein the end portions of the strip member are bent inwardly at a position transversely of the common axis of and approximately tangentially to the rear of said first pair of holes to form an enclosure in said connector between said fence post and the end portions of the strip member when in juxtaposition, in which enclosure a fence wire is locatable so as to be freely movable both axially and relative to said fence post within the limits defined by said enclosure.

According to a further aspect of this invention there is provided a fence connector for transversely positioning a fence wire on a fence post as described in the preceding paragraph, wherein said bends may be provided as portions of flexibility and/or may include a pair of second holes therethrough to provide an area of weakness.

According to a further aspect of this invention there is provided a fence connector for transversely positioning a fence wire on a fence post as described in either one or both of the preceding paragraphs, and wherein a pair of reinforcing ribs or corrugations are provided in a first end portion of said shaped strip member at least extending from and between the transverse bend to adjacent the position where said second end portion overlaps said first end portion when the end portions are mutually engaged.

According to a further aspect of this invention there is provided a method of positioning a fence connector on a fence post, said connector comprising a shaped strip member with a first pair of holes provided through said strip member and adapted to receive a fence post member therethrough when said strip member is in a compressed position, and wherein a second pair of holes are provided in or adjacent the bends in said strip member adjacent each of said first pair of holes, said second pairs of holes being adapted to receive pliers, characterised in that the strip member is resiliently deformed by engaging said pliers in said second pairs of holes and compressing said strip member from a natural position to a compressed position where its two ends are in juxtaposition, whereupon the fence post is located through the first pair of holes, with the pliers then being released, and the strip member being constrained against returning to its natural position by the fence post so as to secure said strip member by frictional engagement to a required position thereon.

Other objects and advantages of this invention will become apparent from the following description which is provided by way of example only. Reference will also be directed to the drawings which are representations of the preferred embodiment only of the invention and whilst approximately to scale are not limited to such dimensions. In particular:

Figure 1: is a side view of a connector according to one preferred form of the invention when not in use (and in its natural position);

Figure 2: is a side view of a connector according to one preferred form of the invention when in a compressed position;

Figure 3: is a corss-section view of a connector according to one preferred form of the invention when provided on a first elongate member or fence post and with the juxtapositioned ends of the connector in an "open" position as described herein;

Figure 3A is a cross-sectional view of the connector according to one preferred form of the invention when provided on a first elongate member and with the juxtaposed ends of the connector in a "closed" position as described herein.

Figure 4: is a perspective view of a connector according to the preferred form of the invention shown in the preceding drawings.

Figure 5: is an exploded diagrammatic view of the connector as shown in Figure 3A.

The following description of the fence connector will be directed to the preferred embodiments of the invention for use in conjunction with fence posts preferably constructed of lengths of pultruded fibreglass material as is known in the art, and high tensile light gauge (1-2 mm) fence wire or fence ribbon. This preferred use provides a fence construction which is lightweight, strong, and resilient and therefore has uses for temporary or "break fencing" and semi-permanent and permanent fencing systems. In all these systems it is advantageous to attach and remove wires from posts quickly so that such fences may be readily constructed and/or disassembled as required, and this invnetion in its preferred embodiment provides a connector to assist in such operations.

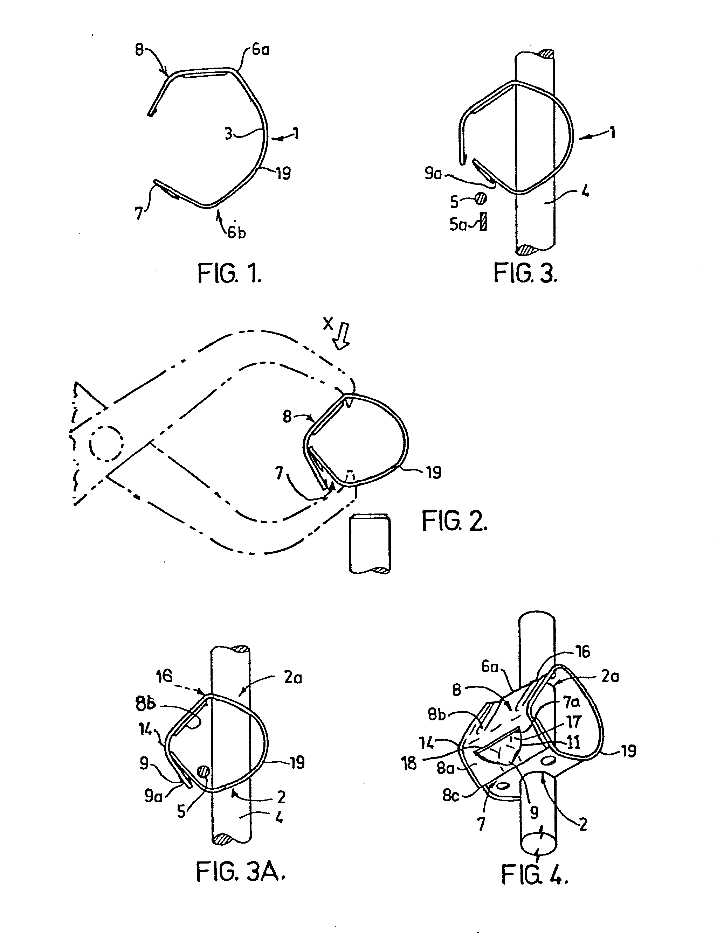

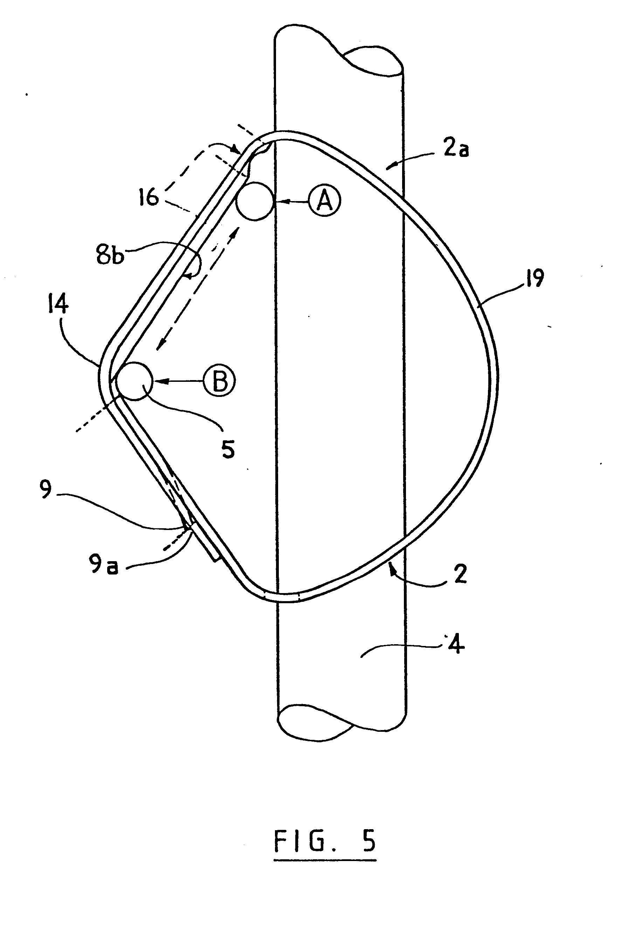

The invention therefore provides a connector being a strip member 1 which is shaped with a curved longitudinal axis adopting a "natural position" such as is shown in Figure 1 of the drawings. In particular, the strip member is preferably a substantially rectangular strip as can be appreciated from Figure 5 which is shaped to provide a curved longitudinal axis having a body portion 3 and end portions 7 and 8. The body portion 3 is preferably curved in such a manner as to be approximately symmetrical about a central lateral axis which can be considered as defining two arms 3a and 3b. The strip member is further shaped by the providing of bends at 6 and 6a on the arms 3a and 3b respectively of the body portion. This further shaping of the strip member thereby provides the pair of end portions 7 and 8 which are inwardly depending. The shaped strip member is deformable and resilient, and in the preferred form of the invention may be manufactured in spring stainless steel, or galvanised steel for protection against corrosion. The shaped strip member 1, shown in Figure 1 in its natural position, is deformable from this position, by compression of the arms 3a and 3b of the member towards each other. The resilience of the material of the strip member is such that this compression can be exerted by manual (finger) compression or preferably by suitably adapted pliers adapted to engage with engaging means which may preferably be at least one or a pair of holes 16 and 16a provided on each of arms 3a and 3b capable of receiving the ends 21 of the pliers 20 (shown in dotted lines). The pliers then exert pressure simultaneously on both arms 3a and 3b to compress the shaped strip member to a compressed position as is shown in Figure 2.

In such position, the pair of holes 2 and 2a are disposed towards co-axial alignment one with the other. These holes 2 and 2a are provided of such dimensions as to receive a fence post, i.e. of circular, elliptical, or other suitable shape which generally corresponds to the cross-sectional shape of the fence post. In the form of the invention shown the holes are of circular dimensions of a diameter only marginally larger than the diameter of the fence post. When the strip member is compressed, it is adapted to receive said fence post which may be inserted therethrough.

· The connector, being the shaped strip portion 1, may then be positioned as required on the post by maintaining the compression with the pliers 20, and moving the connector along the fence post. When so positioned on the fence post 4, the resilience of said shaped strip portion is such that when the compression applied by the pliers is released, the shaped strip portion returns toward its natural position. However, this return of the connector to its natural position is constrained by the fence post 4 located through the pair of holes 2 and 2a. The peripheral edges of the holes are in sufficient frictional contact with the fence post as to secure the connector thereon.

The connector is then in the position shown in Figure 3 of the drawings whereby it is secured to the fence post portion 4 with end portions 7 and 8 of the shaped strip portion now provided in juxtaposition. With reference to Figure 3 of the drawings, a fence wire 5 can be passed between the juxtaposed ends 7 and 8 of the connector as is shown by the directional arrow Y. The fence wire 5 is then located in the connector between the fence post 4 and the juxtaposed ends 7 and 8, which position is shown in Figure 3a of the drawings.

This connector is therefore now arranged substantially as described in United States Specification No. 4,243,343.

The particular improvement on the invention provides firstly for the shaping of the strip member such that the bends in the arms at 6 and 6a as previously referred to are provided at a position transversely of the common axis of and approximately tangentially to the rear of said pair of holes 2 and 2a. Thus, when the connector is located on the first elongate member or fence post, the respective bends 6 and 6a are provided immediately adjacent the post. It has been found particularly advantageous to provide said bend 6 immediately adjacent the fence post 4 to prevent the second elongate member or fence wire, when at position A in the upper portion of the connector, obtaining a leverage against the edge of the hole, which has been found to eventually cause deformation of the connector. This type of vertical upward load is common with fence connectors and as a result the upper hole 2a was previously stretched and thus capable of being moved upwardly on the fence post so as to impart the vertical upward load both on the engaged end portions of the clip and on to the lower hole 2, to eventually stretch the holes, and render the clip ineffective.

The invention further provides for the bends 6 and 6a when positioned as described in the preceding paragraph, to be flexible, by way of providing portions of flexibility and/or areas of weakness. In the preferred embodiment of the invention, the flexibility of the bends 6 and 6a may be provided for by including preferably a pair of secondary holes 16 on or adjacent the line of the respective bends. It will thus be appreciated that the pairs of holes 16 may be provided on either side of or be approximately co-axial with a tangential line of the holes 2 and 2a across the shaped strip member. In the preferred embodiment the secondary holes are provided so that the bend is on a common tangential line from or adjacent the edge of the first (locating) holes 2 and the secondary holes 16. The tangential line of the bend is to be appreciated as common to all of the holes but may be partially segmentary of said holes. Therefore the shaped strip member is at this point somewhat weakened, thus providing each of the bends as portions of flexibility.

It is also to be appreciated that in the preferred embodiment of the invention, the holes 16 may be additionally used as the engaging means for the pair of pliers or other apparatus used for the compressing of the shaped strip member for its positioning on the first elongate member or fence post in the manner previously described.

The invention then provides for shaped end portions 7 and 8 which will be respectively referred to as the first or upper end portion 8 and the second or lower end portion 7 so as to refer to the positioning of the connector in its preferred embodiment on a substantially vertical fence post 4. Therefore, according to the invention the upper end portion 8 is provided as a substantially flat portion which depends at a relatively defined angle from the bend 6a. The end portion 8 is then provided with a further central bend or pair of bends 14 from which a lower flat or shallow curved portion 8a depends in juxtaposition with second end portion 7.  It has been found that the first substantially flat portion depending at an angle from bend 6a provides for a second elongate member or fence wire, when under vertical upward load, to be directed into the apex of the bend 6a so that no leverage is able to be exerted on the upper portion of the clip by said second elongate member. This first end portion 8 is provided with reinforcing ribs or corrugations 8b which substantially increases the strength of the relatively rigid end portion 8 so that a second elongate member or fence wire under excessive load which is not moved to the apex of the bend 6a will not be capa ble of bendingthis portion of the end portion 8. The reinforcing ribs 8b extend from and between the bend 6a and preferably from each of the pair of holes 16 adjacent thereto, by way of a groove or indentation or other suitable reinforcing, to and preferably across the central bend 14.

The providing of the reinforcing ribs 8b has a particular advantage in relation to the location of the fence wire when the connector is in use.  In particular the natural position of the fence wire is normally in the space defined by the juxtaposed end members and the post member. However when a side loading is exerted on the wire the wire is generally  forced  onto the reinforcing ribs.  The raised surface of the reinforcing ribs then naturally encourage the wire to slide towards the bend 6a or possibly bend 14.  The particular improvements of the invention then provide that at "A" the wire is supported in the apex of the bends 6a in a wedge created by the post and the reinforcing ribs and which wedge only increases the strength of the grip of the connector on the post as side load and then vertical load is imparted.

If the wire is at "B" in bend 14 it is supported on the other end of the reinforcing ribs and the distal end of end portion 7, which increases the strength of the bend and the closure mechanism for the two end portions 7 and 8. Thus, the improvements provided by the positioning of the bends 6a and the providing of reinforcing ribs 8a provides a fence connector which is not susceptible to damage with excessive vertical loadings on the connector. These vertical loadings are cuased when the fence is subjected to side loading by animals or vehicles etc, and the wire tension bends the fibreglass posts in the direction of the loading. This causes the wires in the connector (s) on each post to move into the upper portion of the connector. This side loading is the most common form of loading on a fence and its effects on the connector are substantially overcome by the improvement provided by this invention over the prior art, particularly including United States Specification No. 4,243,343.

It is also envisaged that in preferred embodiments the outer lip portion 8c may depend outwardly relative to the end portion 7 so that the second elongate member or fence wire 5 may be conveniently located through the opening between said end portions 7 and 8. Furthermore in one embodiment, the corners of the lip portion 8c may be turned upwardly to again assist in the locating of the fence wire into the connector.

The other end portion 7 may in preferred embodiments include a curved portion depending upwardly from the bend 6. This curved portion is a relatively rigid portion, and while reinforcing may be provided, in the preferred embodiment it is not considered that reinforcing is necessary, in view of the fact that an excessive downwards load is not generally exerted upon a fence wire, in the manner of the excessive upwardly directed load previously referred to. Further, where such a downward force may be anticipated by for example the placement of the post on a crest of a hill, it will be readily appreciated that the connector may be inverted in its positioning on the post so as to overcome such probably excessive downward force. The curved lower end portion 7 is provided with a catch 9 which may be punched out of the surface of said end portion 7 in any suitable shape as may be required. In the preferred shape, the catch 9 may be semi-circular in plan and project above the surface of the end member as shown in Figure 4, so that the end portion 7 and 8 may be engaged by an interlocking arrangement of the catch 9 into the semi-circular hole 11 provided on the corresponding end portion 8.

In the preferred embodiment of the invention, the lip portion 9 is provided with an inwardly curved end portion 9a which enables said lip portion to slide on the surface of the other end portion 8 with only a small frictional contact, and thus assists in the opening and closing of the connector.

It will thus be appreciated according to the methods of the invention as previously described, the connector in its natural position as shown in Figure 1 may be compressed as shown in Figure 2 and positioned on a first elongate member or fence post 4. As will be seen from the drawings, the connector will then be provided in the position shown in Figure 3 of the drawings which represents the connector with the end members in the "open" position providing a gap between the end members suffic ient to permit fence wire 5 or fence ribbon 5a or the like to be passed therebetween. The shape of the end portions as previously described will mean that there is no obstruction to the positioning of the fence wire or ribbon in the connector.

The connection may then be completed by applying manual pressure (as previously described). The hole 11 will then pass over the lip 9a of the said catch 9 and because of its resilient convex shape the end portions 8 will, when released, slide into the position as shown in Figure 3a of the drawings, representing the end members in the "closed" position.

Similarly, the ends of the connector may be disengaged to open by simply applying thumb or finger pressure as described.

·It has been found desirable to provide the inter-engaging arrangement in the lower portion of the connector in view of the less common excessive load applied to that portion of the connector. Further, this position of the inter-engaging arrangement means that the connector may be subject to less precise fitting on the post.

The preferred embodiment of the connector of the invention also includes the use of a locking arrangement for the closable opening of the juxtaposed end portions 7 and 8. In particular, the end 7a of end portion 7 is provided with a convex curve 17 across the body, which curve is adapted to abut against the rear of the recess 11 and end portion 8 when pressure is exerted upon the ridge 14 in the connector. This provides that no animal can disengage the connector from its closed position, merely by exerting weight on the ridge portion 14. The connector can only be opened by application of human finger pressure across the part of the end portion 7 which is exposed by the opening 11 in the other end portion. The pressure required is a downward pressure to disengage the abutting relationship between the end 7a and the rear 18 of the hole 11 in the opposing end portion, simultaneously with pressure being exerted on the ridge 14 so as to move the end portion 8c out of engagement with the lip 9 and thus disengage the end portions 7 and 8.

The engagement of the end portion 7 and 8 may be readi. effected by simultaneously exerting finger pressure on the en portion 7, and slidably moving the end portion 8 over the end portion 7 until the lip 9 is engaged into the corresponding hole provided in end portion 8.

It will therefore be appreciated that the shape of the connector as described herein provides for a substantially symmetrical curved portion including holes 2 and 2a through which the first elongate member may be passed. Thereafter, relatively flexible portions 6 and 6a may be provided extending into a relatively rigid back portion as defined by the mutually engageable end portions 7 and 8. It has been found that the connector of this shape is adapted to overcome the principal stresses as have been found in relation to the use of such connectors particularly as fencing connectors.

Further, in preferred embodiments the apparatus may be provided with roll formed edges 19 which have the advantage of eliminating any likely damage to the fence wire or fencing strip such as cutting or removal of galvanising and additionally increases the overall strength of the connector.

The invention therefore provides an improved connector which may be readily adjustable in height for the fence when constructed to contain animals, and to which a second preferably electrified fence means, for example a fence wire or fence ribbon may be readily engaged or disengaged for efficient use and operation.

Finally, it will be appreciated that the invention has been described by way of example only and that modifications, alterations and additions may be made thereto without departing from the scope thereof.

CLAIMS

1. A fence connector for transversely positioning a fence wire (5) on a fence post (4), comprising a shaped strip member (1) being resiliently deformable by compression from a natural position (Fig. 1), to a compressed position (Fig. 2) where its two ends (7, 8) are in juxtaposition; a first pair of holes (2, 2(a)) provided through said strip member (1) and adapted to receive a fence post (4) therethrough when said body portion (1) is in a compressed position; characterised in that the body portion (1) is constrained against returning to its natural position by the fence post(4) when located through the first pair of holes (2, 2(a)), to thereby secure the strip member (1) by a frictional engagement to a required position on the fence post (4); and wherein the end portions (7, 8) of the strip member are bent (6a, 6b) inwardly at a position transversely of the common axis of and approximately tangentially to the rear of said first pair of holes (2, 2a) to form an enclosure in said connector between said fence post (4) and the end portions (7, 8) of the strip member when in juxtaposition, in which enclosure a fence wire (5) is locatable so as to be freely movable both axially and relative to said fence post (4) within the limits defined by said enclosure.

2.     A fence connector as claimed in claim 1 wherein the transverse bends (6, 6a) are approximately tangential or are on a minor segmental line to the rear of said first pair of holes (2, 2a).

3.     A fence connector as claimed in claim 2 wherein a pair of reinforcing ribs (8b) or corrugations are provided in a first end portion (8) of said shaped strip member (1) at least extending from and between transverse bend (6a) to adjacent the position where said second end portion (7) overlaps said first end portion (8) when the end portion (7, 8) are mutually engaged.

4.     A fence connector as claimed in claim 1 wherein the bends (6a, 6b) are provided as portions of flexibility and/or include a pair of second holes therethrough to provide an area of weakness.

5.     A fence connector as claimed in claim 4 wherein the second holes (16) are provided as a pair of holes for each of the bends (6a, 6b) and are provided tangentially or as a minor segment of the line of said bends (6a, 6b).

6.     A fence connector as claimed in any one of claims 1 to 5 wherein the first end portion (8) is provided with a substantially flat portion depending outwardly from bend (6a) and includes secondary bend or bends (14) and an outer flat portion (8a) including an opening (11) adapted to receive an engaging means (9)

7.     A fence connector as claimed in claims 1 to 6 wherein said second end portion (7) is provided as a shallow curved portion and includes an outwardly depending catch (9) with an inwardly curved end portion (9a).

8.      A fence connector as claimed in claim 6 wherein the outer end portion (8a) of the first end member is provided with upwardly turned locating corner portions (8c).

9.      A fence connector as claimed in any one of claims 1 to 8 constructed of resilient spring stainless material and including rolled outer edges (19).

10.    · A method of positioning a fence connector (1) on a fence post (4), said connector (1) comprising a shaped strip member with a first pair of holes (2, 2a) provided through said strip member and adapted to receive a fence post member therethrough when said strip member is in a compressed position, and wherein a second pair of holes (16) are provided in or adjacent the bends (6, 6a) in said shaped strip member adjacent each of said first pair of holes (2, 2a), said second pairs of holes (16) being adapted to receive pliers (Fig. 2), characterised in that the strip member (1) is resiliently deformed by engaging said pliers in said second pairs of holes (16) and compressing said strip member from a natural position (Fig. 1) to a compressed position (Fig. 2) where its two ends (7, 8) are in juxtaposition, whereupon the fence post is located through the first pair of holes (2, 2a), with the pliers then being released, and the strip member being constrained against returning to its natural position by the fence post (4) so as to secure said strip member (1) by frictional engagement to a required position thereof.

FIG. 1.

FIG. 3.

FIG. 2.

FIG. 3A.

FIG. 4.

0066143

FIG. 5